# EUROPEAN PATENT SPECIFICATION

(11) **EP 0 820 964 B1**
(45) Date of publication and mention of the grant of the patent: **19.12.2001**
(21) Application number: 97305455.4
(22) Date of filing: 21.07.1997
(51) Int. Cl.: C03C 3/087, C03C 4/02, C03C 1/10

(54) **Blue coloured glasses**
Blaufarbige Gläser
Verres à couleur bleue

(30) Priority: 27.07.1996 GB 9615844
(43) Date of publication of application: 28.01.1998
(73) Proprietor: PILKINGTON PLC, St. Helens, Merseyside WA10 3TT (GB)
(72) Inventor: Fyles, Kenneth Melvin, Wigan, Lancashire WN4 0SE (GB); Stanley, Andrew Thomas, Maghull, Merseyside L31 5JB (GB); Eaves, Helen Louise, Near Warrington, Cheshire WA3 1NZ (GB)
(74) Representative: Halliwell, Anthony Charles

(56) References cited:
- EP-A- 0 536 049
- EP-A- 0 644 164
- WO-A-96/28394
- FR-A- 2 074 983
- US-A- 4 866 010
- US-A- 5 478 783
- J.KOCIK ET AL.: "färben des glases, beispiele der zusammensetzung von färbgläsern" SPRECHSAAL., vol. 122, no. 2, February 1989, COBURG DE, pages 131-137, XP000034033

## Description

The present invention relates to blue coloured glasses. More particularly, the present invention relates to blue coloured glasses which can be made by the float process and which are primarily, but not exclusively, intended for use in automotive vehicles.

In recent times, it has become desirable that glasses primarily intended for use in automotive vehicles should be heat absorbing. A useful colorant for such purposes is iron because the presence of ferrous, as distinct from ferric, iron in the glass reduces the infra-red transmission of the glass. Iron provides the glass with a green coloration and this, in the automotive field, is usually desirable because the glass coloration coordinates well with a wide range of colours used in painting the bodywork of the vehicle. However, a blue coloured glass coordinates better with some bodywork colours.

Blue coloured glasses are most easily produced simply by adding cobalt oxide to a batch composition. However, cobalt oxide reduces the light transmission of the glass and does relatively little to reduce the infra-red (heat) transmission.

Alternatively, blue glasses can be produced by using solely iron as the colorant. This is achieved by increasing the proportion of ferrous, as opposed to ferric, iron to very high levels, often in excess of 50%. However, the glass then becomes progressively more difficult to melt without the risk of inclusions being formed in the glass, particularly silica scum. Furthermore, sulphate is often used to refine the glass and, at very high ferrous levels, iron sulphide may be produced which makes the predominant colour of the glass yellow or amber.

Accordingly, to overcome these problems, batches containing very low amounts of sulphate and techniques such as vacuum refining have been suggested. This latter procedure is, in itself, difficult to operate. Alternatively, special reagents, which are relatively expensive, may be used to avoid the need for special refining techniques. For example, oxides of tin or zinc may be required. These preferentially attach themselves to sulphur containing materials which are usually present to assist in the refining of the glass. Ultra-violet radiation absorption is, however, reduced in glasses having a high ferrous to ferric iron ratio. This is because ferric iron absorbs strongly in the ultra-violet portion of the spectrum. In order to improve the ultra-violet absorption of such glasses, it is known to use oxides of cerium, titanium and/or vanadium in high ferrous glasses. Whilst these oxides are efficient, they are extremely expensive.

Blue glasses manufactured at a high ferrous state are described in various prior art documents. For example, United States Patent Specification No. 4792536 describes a blue glass containing 0.45% to 0.65% Fe₂O₃ which is melted at high ferrous states in excess of 35% under very special conditions. Moreover, the sulphate level must be maintained at a very low level, below about 0.02% SO₃, to prevent amber coloured glass being formed due to the presence of sulphur.

United States Patent Specification No.3652303 describes blue glasses containing from 0.1% to 2% Fe₂O₃ with an extremely high ferrous state content in excess of 80%. This high ferrous state is achieved by the inclusion of tin oxide in the glass composition. In order to prevent the production of an amber coloration, it is necessary to balance the tin and ferrous iron content. The ratio of stannous to ferrous ions needs to be maintained, on a mole per cent basis, at at least 1:1.

Blue glasses are also described in United States Patent Specification No. 5013487. These glasses contain from 0.3% to 0.7% Fe₂O₃ and a high ferrous state is maintained by the use of at least 0.5% ZnO. These glasses are difficult to produce. In particular, there is a risk that the zinc oxide will be reduced, in the float bath, to zinc metal. This leaves a surface bloom on the glass. Still further, United States Patent Specification No. 5344798 describes a blue glass containing 0.3% to 0.9% Fe₂O₃ but having a ferrous iron to ferric iron ratio of 0.8 to 2.5 : 1. This is equivalent to a ferrous content of between 44.4% to 71.5%. However, glasses of the above-described type are obliged to contain cerium, titanium or vanadium if they are to have good ultra-violet absorption characteristics.

In the literature, there are described other methods of producing blue glasses and such methods are compatible with conventional float glass manufacture. A blue-green glass is described in United States Patent Specification No. 2755212. This contains cobalt oxide in addition to iron oxide. The infra-red and ultra-violet absorption properties of such glass are controlled by the addition, to the melt, of carbon or another reducing agent and the colour is achieved by the addition of the cobalt oxide, typically in an amount of the order of 8ppm by weight. This relatively small amount of cobalt oxide does not impart a sufficiently deep coloration for the present purposes and the infra-red (heat) absorption is not considered to be acceptable by current standards. It should be pointed out that the addition of cobalt to a glass will turn the colour thereof blue. However, cobalt has very little effect on the heat transmission characteristics of the glass. It also has the disadvantage that it will reduce the visible light transmission of the glass. The light transmission of the glass also decreases as the percentage of ferrous iron in the glass is increased at a constant total iron content.

On the other hand, United States Patent Specification No. 4866010 discloses a glass containing from 0.3% to 0.9% Fe₂O₃, 40 to 80 ppm of Co₃O₄ and 1 to 10 ppm of selenium. However, the use of selenium is not desirable because it is extremely volatile. This gives rise to the difficulty of ensuring the correct amount of selenium is actually present in the glass and also to the environmental problems of the gaseous selenium, which is poisonous, being discharged into the atmosphere. Furthermore, the visible light transmission of the glass described in this patent specification precludes its use in vehicle windscreens for which the light transmission must be at least 70%.

A further blue glass containing selenium is disclosed in United States Patent Specification No. 5070048. Additionally, such glass contains NiO. The infra-red (heat) absorption of such a glass is not, however, acceptable by current standards and the visible light transmission of such glass is, again, too low to render it suitable for use in vehicle windscreens.

The present invention therefore seeks to provide a blue glass which does not suffer from the disadvantages of the blue glasses described in the above-mentioned prior patent specifications. In particular, the present invention seeks to provide blue glasses without the need for the use of expensive additives such as cerium, neodymium and the like and/or difficult materials to handle such as selenium.

More specifically, the present invention seeks to provide a blue glass which has a relatively high visible light transmission (measured under Illuminant A) and a relatively low direct solar heat transmission which is at least 16 percentage points, preferably at least 20 percentage points, lower than the visible light transmission.

According to the present invention, there is therefore provided a blue, heat absorbing, soda-lime-silica glass composition comprising a base glass composition comprising:

| | |
|---|---|
| SiO₂ | 65% to 75% (by weight) |
| Na₂O | 10% to 18% |
| K₂O | 0% to 5% |
| MgO | 0% to 5% |
| CaO | 4% to 14% |
| Al₂O₃ | 0% to 5% |
| B₂O₃ | 0% to 5% |
| BaO | 0% to 5% |

and a colorant portion, characterised in that the colorant portion comprises :-

| | |
|---|---|
| Total iron (calculated as Fe₂O₃) | 0.4% to 1.1% (by weight) |
| Co₃O₄ | 10ppm to 75ppm |

the proportion of iron in the ferrous state lying in the range of 20% to 40%, the glass having, in a thickness of 1mm to 6mm, a Direct Solar Heat Transmission at least 16 percentage points lower than the visible light transmission of the glass, a dominant wavelength lying within the range of 480nm to 490nm and a colour purity of at least 6%.

Preferably, small amounts of sulphate are present in the glass in an amount of from 0.1% to 0.3% by weight.

Desirably, the level of ferrous iron in the glass is achieved by adding carboniferous materials to the batch from which the glass is made. Alternatively or additionally, a material having a high ferrous iron content is used as a source of at least part of the iron present in the glass. Titania (TiO₂) may also be present in the glass as an impurity in the batch materials. This has the advantage of improving the ultra-violet radiation absorption although it has the disadvantage of tending to make the colour of the glass more yellow which goes against the aim of producing a blue glass.

In a desirable aspect of the present invention, the glass, in a thickness of 4mm, has a light transmission of at least 70% and a direct solar heat transmission which is less than 52.5%, optimally less than 50%. It is also desirable if the direct solar heat transmission is at least 20 percentage points lower than the visible light transmission. It is advantageous if the ultra-violet transmission (ISO) is less than 35%, optimally less than 32%.

We have surprisingly found that the composition of the present invention gives glasses of the desired blue coloration but with properties which render it suitable for use as a heat absorbing glass. Simultaneously, the glass has a luminous transmission which is sufficiently high to allow the glass to be used in many different applications.

For the avoidance of doubt, definitions of certain features of glass will now be given. The "ferrous" iron content of a glass is determined from the optical density of the glass at 1000nm and the ferrous iron extinction coefficient is given in the book "Colour Generation and Control in Glass" by C. Bamford and published by Elsevier in 1977. This gives the weight percentage of ferrous iron in the glass expressed as Fe₂O₃. The ferrous state percentage is the ferrous iron content thus calculated divided by the total amount of iron present (expressed as Fe₂O₃).

The "light transmission" refers to the visible transmission according to the spectrum of tungsten headlights in motor vehicles which is known as "Illuminant A".

"Direct Solar Heat Transmission" or "DSHT" is the direct solar heat transmitted at air mass 2 (simulating rays from the sun striking an object at an angle of 30°) over the range of 350 to 2100nm.

UV (ISO) is the ultraviolet radiation transmitted over the range of 280 to 380nm according to the definition in ISO 9050.

UV (PM) is the ultraviolet radiation transmitted over the range of 300 to 400nm according to the Parry-Moon solar distribution.

The dominant wavelength and the colour purity define the colour of the glass according to the "CieLAB" system, and using Illuminant D65.

We have surprisingly found that the composition of the present invention gives a glass of the desired blue coloration with properties which render it suitable as a heat absorbing glass but which simultaneously has a luminous transmission high enough to allow it to be used in vehicle windows. Moreover, such composition allows the glass to be easily manufactured without the above-described problems occurring.

In a desirable aspect of the present invention, the composition is used to produce a glass having a thickness of 3mm to 5mm which meets the visible light transmission requirements, that is to say, it has a visible light transmission of at least 70%, to enable it to be used in automotive vehicles. Optimally, it also has a Direct Solar Heat Transmission which is at least 20 percentage points lower than the visible light transmission. It is also desirable if the colour purity of glasses in accordance with the present invention is at least 7.

Advantageously, the dominant wavelength of the glass lies within the range of 484nm to 490nm. To achieve this, one preferred embodiment of the present invention provides that the total iron content, expressed by weight and calculated as Fe₂O₃, lies within the range of 0.4% to 0.75%, the percentage of iron in the ferrous state lies within the range of 26% to 40% and the amount of Co₃O₄ lies within the range of 10ppm to 60ppm. Optimally in such a case, the ferrous state lies within the range of from 26% to 35% and the amount of Co₃O₄ lies within the range of 25ppm to 60ppm. This is advantageously used to produce a glass having a thickness of 3 mm to 5 mm. Such composition can also be used to produce a glass having a thickness of approximately 2 mm and this may then be laminated with suitable materials such as clear glass. By so doing, a laminate having a visible light transmission of over 75% may be produced, thus enabling the laminate to be used to form a vehicle windscreen.

Hitherto, it has been believed that the addition of cobalt to an iron-containing glass would assist the formation of a blue glass but would render the luminous transmission too low for vehicle window use. If the amount of iron is increased, the glass turns green and the luminous transmission also drops. If insufficient iron is present, particularly in the ferrous state, the desired transmission could be achieved but the glass would not have the desired heat absorption qualities. The addition of, by prior art standards, much larger amounts of cobalt that have hitherto been used is contrary to natural expectations as is the use in the present invention of the particular level of ferrous iron in the composition which is relatively high by glass making standards but is very much lower than the amounts specified in some of the above-identified prior art patent specifications.

The composition of the present invention may also be used to produce glass of a thickness of about 1mm or 2mm. If desired, such glass may then be laminated with other suitable materials, such as clear glass, to give a glass product with a sufficiently high luminous transmission above 75%, to enable the laminate to be used in vehicle windscreens. A 1mm or 2mm thick glass in accordance with the present invention is advantageously made from a composition in which the amount of colorants is as follows:-

| | |
|---|---|
| Total iron | 0.7% to 1.1% |
| Co₃O₄ | 35ppm to 65ppm |
| Ferrous state | 26% to 40%. |

The optimal ferrous state range, in such a case, is 26% to 35% and the optimal range for the Co₃O₄ is 35ppm to 60ppm. Such thin glazing is of importance in, for example, electric vehicles where minimisation of the weight of the vehicle is extremely important.

In an alternative embodiment of the present invention, the composition can be used to make glass of an architectural thickness (of the order of 6mm). There is a particular desire for such glass to have a visible light transmission of about 55%. The colour purity, in such a case, is preferably greater than 10%. A preferred composition in accordance with the present invention which permits these criteria to be attained is:-

| | |
|---|---|
| Total Iron | 0.4% to 0.9% |
| Ferrous state | 20% to 40% |
| Co₃O₄ | 35ppm to 75ppm. |

The optimal range for the ferrous state is 26% to 35% and, similarly, the optimal range for the Co₃O₄ content is 35ppm to 65ppm. The preferred colour purity for such glasses is at least 10% and it is advantageous if the ultra-violet transmission (ISO) thereof is less than 20%.

In all of the above systems, Fe₂O₃, Co₃O₄ and the ferrous state have been used in such a way as to give glasses of a blue coloration having an adequately high visible light transmission but very good solar heat absorption properties. Such glasses can be made in a conventional glass making furnace at economic load and do not necessitate the use of expensive raw materials.

The invention will be further illustrated, in a non-limitative fashion, with reference to the following Examples of glasses in accordance with the present invention.

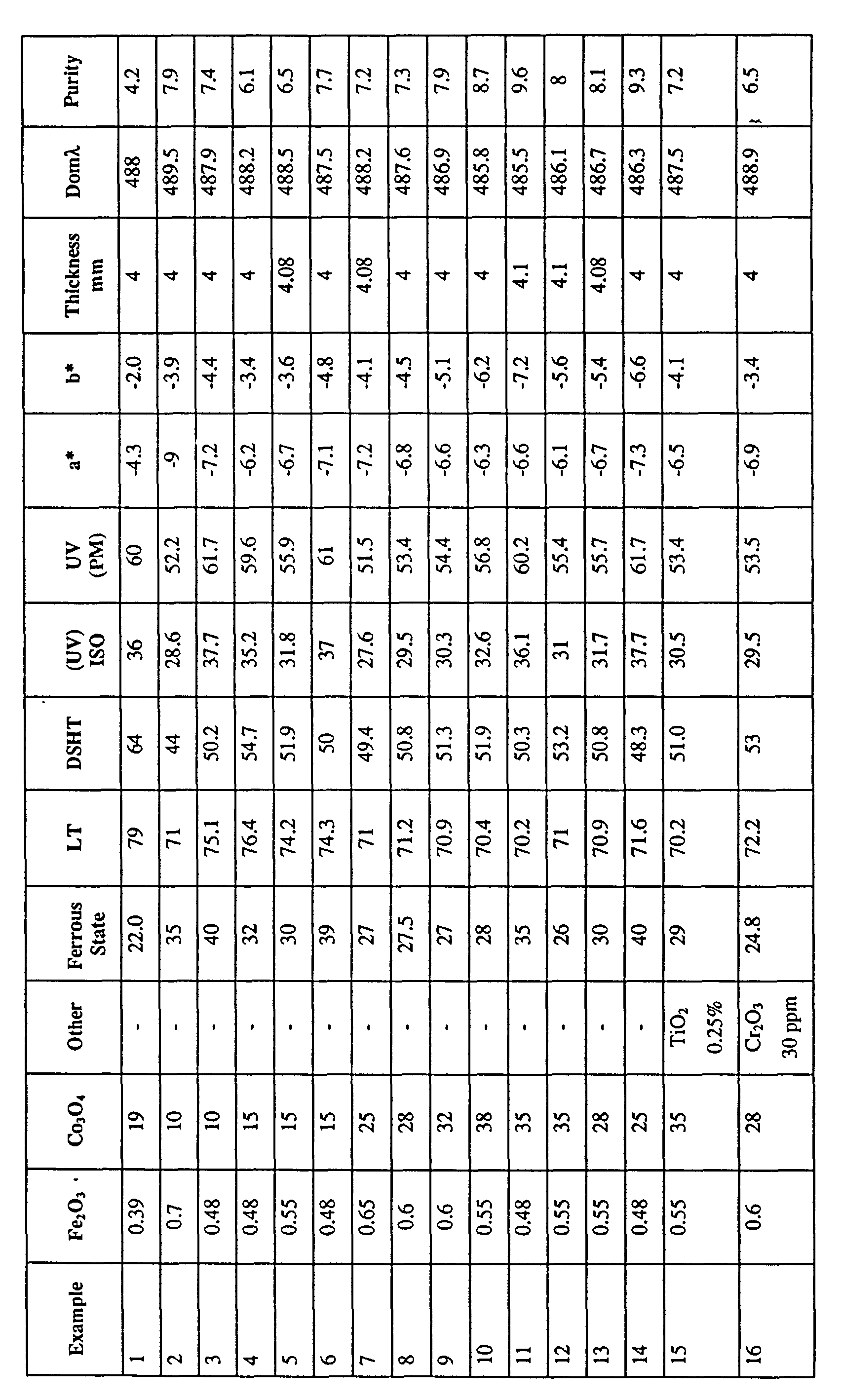

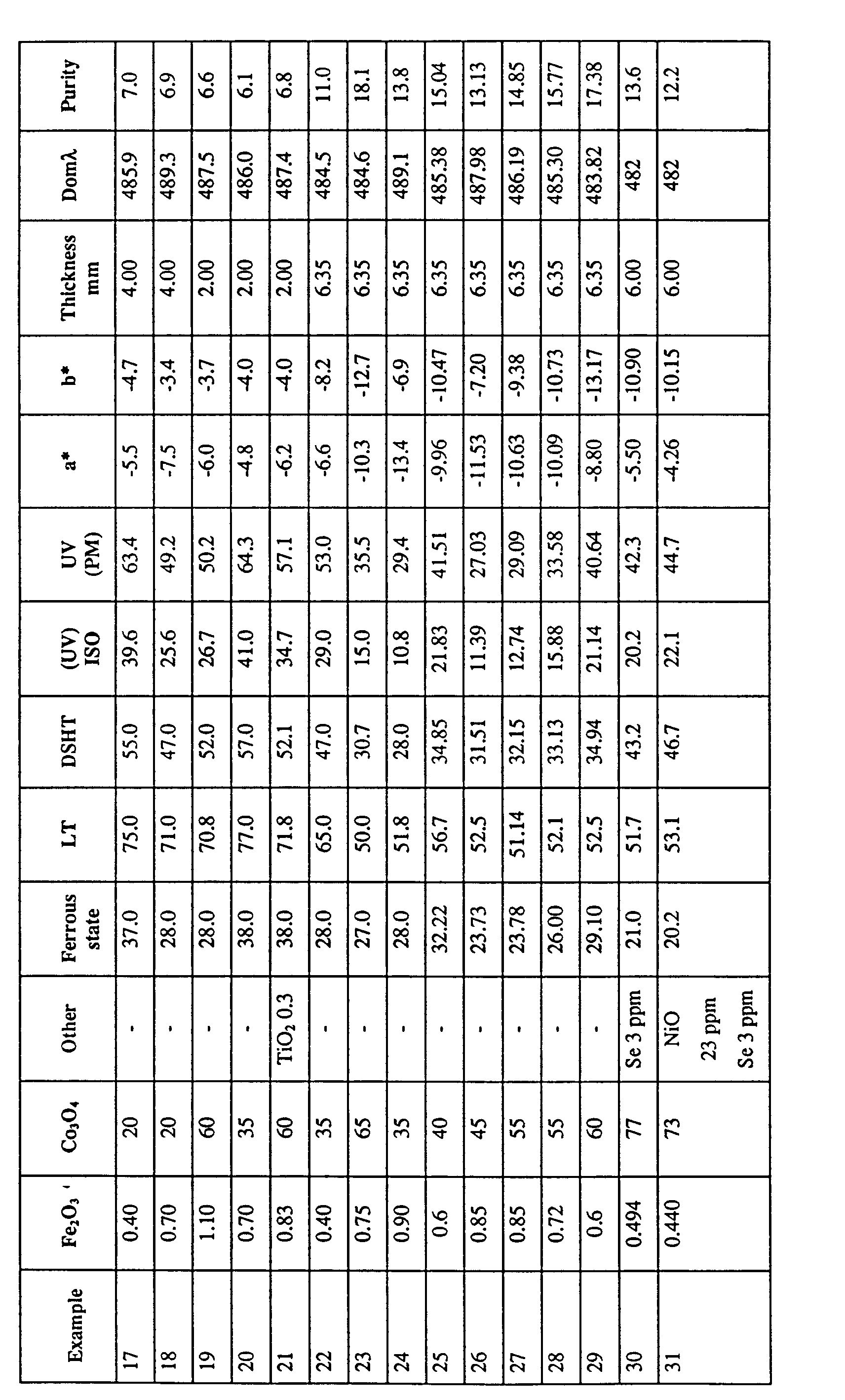

In these Examples, Example 1 is a comparative Example and is commercially available blue glass used in vehicles. However, it does not meet the solar heat transmission requirements of the glasses of the present invention and also has a colour purity which is too low. It will be appreciated by those skilled in the art that the colour purity of a glass is an indication of the depth of colour and that a high colour purity is desirable in certain instances. Examples 30 and 31 are also comparative Examples and show architectural glasses having a thickness of 6mm. All of the remaining Examples are in accordance with the present invention. However, it should be noted that in Examples 2 and 3, the amount of cobalt present is at the minimum permitted by the present invention and the amount of ferrous iron is increased compared with most of the other Examples.

In Examples 4 to 8 inclusive, the amount of ferrous iron has been changed as has the amount of cobalt and it will be seen that the desired blue coloration is achievable. Examples 7 to 15 inclusive show the preferred blue coloured glasses of the present invention having a dominant wavelength lying within the range of 484nm to 490nm. It will be seen that these latter Examples show glasses having a wide range of ferrous states (within the scope of the present invention) and amounts of Co304 above 25 ppm. From the Table, it will be readily apparent to those skilled in the art that if the amount of cobalt is in excess of 25 ppm, the amount of ferrous iron present becomes less critical as long as it lies within the range of 26% to 40%. Similarly, if the ferrous value is maintained within the range of 26% to 40%, the amount of cobalt present is less critical as long as it remains in excess of 25ppm. As shewn by Examples 2 to 6 inclusive, it is possible for blue glasses to be made with less than 25 ppm cobalt but this makes the amount of ferrous iron more critical. In passing, it should be noted that Example 15 shows a glass in accordance with the present invention which contains TiO₂ as an impurity.

Examples 19, 20 and 21 are examples of glasses having a thickness of 2mm and Examples 22 to 29 inclusive are examples of architectural glasses having a thickness of 6mm.

In all of the Examples, the amounts of the constituents are given in weight percent; the ferrous state, the visible light transmission, the total solar heat transmission, the ultra-violet transmissions and the colour purity are expressed as percentages and the dominant wavelength is expressed in nanometres.

## Claims

1. A heat-absorbing blue glass composition comprising a base glass composition comprising:
| | |
|---|---|
| SiO₂ | 65% to 75% (by weight) |
| Na₂O | 10% to 18% |
| K₂O | 0% to 5% |
| MgO | 0% to 5% |
| CaO | 4% to 14% |
| Al₂O₃ | 0% to 5% |
| B₂O₃ | 0% to 5% |
| BaO | 0% to 5% |
and a colorant portion containing iron and cobalt **characterised in that** the colorant portion consists essentially of
| | |
|---|---|
| Total Iron (expressed as Fe₂O₃) | 0.4% to 1.1% (by weight) |
| Co₃O₄ | 10ppm to 75ppm |
the proportion of iron in the ferrous state lying within the range of 20% to 40%, optionally 26% to 35%, the glass having, in a thickness of 1 to 6 millimetres, a direct solar heat transmission at least 16, optionally 20, percentage points less than the visible light transmission, a dominant wavelength lying in the range of 480nm, optionally 484, to 490nm and a colour purity of at least 6%.

2. A composition as claimed in claim 1 **characterised by** the presence of a sulphate refining aid in an amount of from 0.1% to 0.3% by weight.

3. A composition as claimed in claim 1 or 2 **characterised in that** the desired proportion of ferrous iron in the composition is produced by adding carboniferous materials to the composition.

4. A composition as claimed in any preceding claim **characterised in that** a material having a high ferrous content is used as the source of at least part of the iron present in the glass.

5. A composition as claimed in any preceding claim **characterised in that** the glass produced has a direct solar heat transmission of less than 52.5%, optionally less than 50%.

6. A composition as claimed in any preceding claim **characterised in that** the glass produced has an ultra-violet transmission (ISO) of less than 35%, optionally less than 32%.

7. A composition as claimed in any preceding claim **characterised in that** the colorant portion consists essentially of :-
| | |
|---|---|
| Total Iron | 0.4% to 0.9% |
| Co₃O₄ | 35ppm to 75ppm, optionally 35ppm to 65ppm, |
the glass produced therefrom, in a 6mm thickness, having a visible light transmission in excess of 50%.

8. A composition as claimed in claim 7 **characterised in that** the colour purity of the glass produced is at least 10%.

9. A composition as claimed in claims 7 or 8 **characterised in that** the ultraviolet transmission (ISO) of the glass produced is less than 20%.

10. A composition as claimed in any one of claims 1 to 6 **characterised in that** the colorant portion consists essentially of: -
| | |
|---|---|
| Total Iron | 0.4% to 0.75% |
| Co₃O₄ | 10ppm to 60ppm, optionally 25ppm to 60ppm, |
the glass produced, in a thickness of 3mm to 5mm, having a visible light transmission of at least 70%.

11. A composition as claimed in any one of claims 1 to 6, **characterised in that** the colorant portion consists essentially of :-
| | |
|---|---|
| Total Iron | 0.7% to 1.1% |
| Co₃O₄ | 25ppm to 65ppm, optionally 35ppm to 60ppm, |
the glass produced. in a thickness of 1mm to 2mm, having a visible light transmission of at least 70%.

12. A laminated glass comprising a glass produced from a composition as claimed in claim 11 laminated to any other suitable material.

13. A laminated glass as claimed in claim 12 wherein the suitable material is a clear glass.

## Patentansprüche

1. Wärmeabsorbierende Blauglaszusammensetzung mit einer Basisglaszusammensetzung mit:
| | |
|---|---|
| SiO₂ | 65 bis 75 % (Gewicht) |
| Na₂O | 10 bis 18 % |
| K₂O | 0 bis 5% |
| MgO | 0 bis 5% |
| CaO | 4 bis 14 % |
| Al₂O₃ | 0 bis 5% |
| B₂O₃ | 0 bis 5 % |
| BaO | 0 bis 5 % |
und mit einem Einfärbungsteil mit Eisen und Kobalt, **dadurch gekennzeichnet, daß** der Einfärbungsteil besteht aus
| | |
|---|---|
| Eisen gesamt (ausgedrückt als Fe₂O₃) | 0,4 bis 1,1 % (Gewicht) |
| Co₃O₄ | 10 bis 75 ppm, |
wobei der Anteil von zweiwertigem Eisen im Bereich von 20 bis 40 %, vorzugsweise 26 bis 35 % liegt, wobei das Glas bei einer Dicke von 1 bis 6 mm eine Sonnenwärmedurchlässigkeit hat, die zumindest 16 %, vorzugsweise 20 % unter der Durchlässigkeit für sichtbares Licht liegt, wobei die vorwiegende Wellenlänge im Bereich von 480 nm, vorzugsweise 484 nm, bis 490 nm liegt, und eine Farbreinheit von zumindest 6 % vorliegt.

2. Zusammensetzung nach Anspruch 1, **gekennzeichnet durch** 0,1 bis 0,3 Gew.-% eines Sulfatraffinierungshilfsstoffs.

3. Zusammensetzung nach Anspruch 1 oder 2, **dadurch gekennzeichnet, daß** der gewünschte Anteil von Eisen im zweiwertigen Zustand in der Zusammensetzung durch Hinzugabe kohlehaltiger Materialien zur Zusammensetzung eingestellt wird.

4. Zusammensetzung nach einem der vorherigen Ansprüche, **dadurch gekennzeichnet, daß** ein Material mit einem hohen Gehalt zweiwertigen Eisens als Quelle zumindest eines Teils des Eisens in der Zusammensetzung verwendet wird.

5. Zusammensetzung nach einem der vorherigen Ansprüche, **dadurch gekennzeichnet, daß** das hergestellte Glas eine direkte Sonnenwärmedurchlässigkeit von weniger als 52,5 %, vorzugsweise weniger als 50 % hat.

6. Zusammensetzung nach einem der vorherigen Ansprüche, **dadurch gekennzeichnet, daß** das hergestellte Glas eine UV-Durchlässigkeit (ISO) von weniger als 35 %, vorzugsweise weniger als 32 % hat.

7. Zusammensetzung nach einem der vorherigen Ansprüche, **dadurch gekennzeichnet, daß** der Einfärbungsteil im wesentlichen besteht aus:
| | |
|---|---|
| Eisen gesamt | 0,4 bis 0,9 % |
| Co₃O₄ | 35 bis 75 ppm, |
| | vorzugsweise 35 bis 65 ppm, |
wobei das so erzeugte Glas bei 6 mm Dicke eine Durchlässigkeit für sichtbares Licht über 50 % hat.

8. Zusammensetzung nach Anspruch 7, **dadurch gekennzeichnet, daß** die Farbreinheit des erzeugten Glases mindestens 10 % ist.

9. Zusammensetzung nach Anspruch 7 oder 8, **dadurch gekennzeichnet, daß** die UV-Durchlässigkeit (ISO) des erzeugten Glases niedriger als 20 % ist.

10. Zusammensetzung nach einem der Ansprüche 1 bis 6, **dadurch gekennzeichnet, daß** der Einfärbungsteil im wesentlichen besteht aus:
| | |
|---|---|
| Eisen gesamt | 0,4 bis 0,75 % |
| Co₃O₄ | 10 bis 60 ppm, |
| | vorzugsweise 25 bis 60 ppm, |
wobei das so erzeugte Glas bei einer Dicke von 3 bis 5 mm eine Durchlässigkeit für sichtbares Licht von zumindest 70 % hat.

11. Zusammensetzung nach einem der Ansprüche 1 bis 6, **dadurch gekennzeichnet, daß** der Einfärbungsteil im wesentlichen besteht aus:
| | |
|---|---|
| Eisen gesamt | 0,7 bis 1,1 % |
| Co₃O₄ | 25 bis 65 ppm, |
| | vorzugsweise 35 bis 60 ppm, |
wobei das so erzeugte Glas bei einer Dicke von 1 bis 2 mm eine Durchlässigkeit für sichtbares Licht von zumindest 70 % hat.

12. Glaslaminat mit einem Glas, das aus einer Zusammensetzung nach Anspruch 11 erzeugt wurde, das auf ein anderes geeignetes Material laminiert ist.

13. Glaslaminat nach Anspruch 12, bei dem das geeignete Material ein klares Glas ist.

## Revendications

1. Composition de verre bleu absorbant la chaleur, comprenant une composition de verre de base renfermant les constituants suivants :
| | |
|---|---|
| SiO₂ | 65 % à 75 % (en poids) |
| Na₂O | 10 % à 18 % |
| K₂O | 0 % à 5 % |
| MgO | 0 % à 5 % |
| CaO | 4 % à 14 % |
| Al₂O₃ | 0 % à 5 % |
| B₂O₃ | 0 % à 5 % |
| BaO | 0 % à 5 % |
et une partie colorante contenant du fer et du cobalt, **caractérisée en ce que** la partie colorante consiste essentiellement en
| | |
|---|---|
| fer total (exprimé en Fe₂O₃) | 0,4 % à 1,1 % (en poids) |
| Co₃O₄ | 10 ppm à 75 ppm |
la proportion de fer à l'état ferreux étant comprise dans l'intervalle de 20 % à 40 %, facultativement de 26 % à 35 %, le verre ayant, en une épaisseur de 1 à 6 mm, une transmission de chaleur solaire directe inférieure d'au moins 16, facultativement 20, points de pourcentage à la transmission de la lumière visible, une longueur d'onde dominante comprise dans l'intervalle de 480 nm, facultativement 484 nm, à 490 nm et une pureté de couleur d'au moins 6 %.

2. Composition suivant la revendication 1, **caractérisée par** la présence d'un adjuvant d'affinage consistant en sulfate en une quantité de 0,1 % à 0,3 % en poids.

3. Composition suivant la revendication 1 ou la revendication 2, **caractérisée en ce que** la proportion désirée de fer ferreux dans la composition est produite en ajoutant des matières carbonées à la composition.

4. Composition suivant l'une quelconque des revendications précédentes, **caractérisée en ce qu'**une matière ayant une haute teneur en fer ferreux est utilisée comme source d'au moins une partie du fer présent dans le verre.

5. Composition suivant l'une quelconque des revendications précédentes, **caractérisée en ce que** le verre produit a une transmission de chaleur solaire directe inférieure à 52,5 %, facultativement inférieure à 50 %.

6. Composition suivant l'une quelconque des revendications précédentes, **caractérisée en ce que** le verre produit a une transmission de lumière ultraviolette (ISO) inférieure à 35 %, facultativement inférieure à 32 %.

7. Composition suivant l'une quelconque des revendications précédentes, **caractérisée en ce que** la partie colorante consiste essentiellement en :
| | |
|---|---|
| fer total | 0,4 % à 0,9 % |
| Co₃O₄ | 35 ppm à 75 ppm, facultativement |
| | 35 ppm à 65 ppm |
le verre produit à partir de cette composition, en une épaisseur de 6 mm, ayant une transmission de la lumière visible supérieure à 50 %.

8. Composition suivant la revendication 7, **caractérisée en ce que** la pureté de couleur du verre produit est égale à au moins 10 %.

9. Composition suivant la revendication 7 ou 8, **caractérisée en ce que** la transmission de lumière ultraviolette (ISO) du verre produit est inférieure à 20 %.

10. Composition suivant l'une quelconque des revendications 1 à 6, **caractérisée en ce que** la partie colorante consiste essentiellement en :
| | |
|---|---|
| fer total | 0,4 % à 0,75 % |
| Co₃O₄ | 10 ppm à 60 ppm, facultativement |
| | 25 ppm à 60 ppm, |
le verre produit, en une épaisseur de 3 mm à 6 mm, ayant une transmission de la lumière visible d'au moins 70 %.

11. Composition suivant l'une quelconque des revendications 1 à 6, **caractérisée en ce que** la partie colorante consiste essentiellement en :
| | |
|---|---|
| fer total | 0,7 % à 1,1 % |
| Co₃O₄ | 25 ppm à 65 ppm, facultativement |
| | 35 ppm à 60 ppm, |
le verre produit, en une épaisseur de 1 mm à 2 mm, ayant une transmission de la lumière visible d'au moins 70 %.

12. Verre stratifié comprenant un verre produit à partir d'une composition suivant la revendication 11, stratifié à n'importe quelle autre matière convenable.

13. Verre stratifié suivant la revendication 12, dans lequel la matière convenable est un verre transparent.
